# FASCICULE DE BREVET EUROPEEN

(11) **EP 3 720 738 B1**
(45) Date de publication et mention de la délivrance du brevet: **26.01.2022**
(21) Numéro de dépôt: 18836377.4
(22) Date de dépôt: 03.12.2018
(51) Int. Cl.: B60R 13/04, B60J 10/88

(54) **ENJOLIVEUR D'ENCADREMENT D'UNE PORTE DE VEHICULE**
VERKLEIDUNG FÜR FAHRZEUGTÜRRAHMEN
VEHICLE DOOR FRAME TRIM

(30) Priorité: 07.12.2017 FR 1761792
(43) Date de publication de la demande: 14.10.2020
(73) Titulaire: NOVARES France, 92140 Clamart (FR)
(72) Inventeur: CHENAUD, David, 01100 Bellignat (FR); PERRIN, Raphaël, 01460 Beard-Geovreissiat (FR)
(74) Mandataire: Germain Maureau
(86) Numéro de dépôt international: PCT/FR2018/053091
(87) Numéro de publication internationale: WO 2019/110907

(56) Documents cités:
- EP-A1- 1 695 808
- EP-A1- 2 113 422
- EP-A2- 1 584 517
- WO-A1-2010/048619
- WO-A1-2013/041368

## Description

La présente invention se rapporte à un enjoliveur destiné à venir se superposer sur une tôle d'un encadrement d'une porte de véhicule afin d'améliorer l'aspect visuel dudit véhicule et/ou pour apporter des fonctionnalités techniques.

De manière classique, les véhicules automobiles sont équipés d'enjoliveurs de pied milieu. Il s'agit d'enjoliveurs qui sont chaussés sur la tôle du montant arrière de l'encadrement d'une porte avant sur la tôle du montant avant de l'encadrement d'une porte arrière dans le cas d'un véhicule à quatre portes ou sur la tôle d'un montant de pavillon dans le cas d'un véhicule à deux portes et sur la tôle du montant arrière de l'encadrement d'une porte arrière. De tels enjoliveurs ont notamment été décrits dans les documents EP 2 113 422, EP 1 695 808, EP 1584 517, WO 2013/041368 et WO2010048619, ce dernier document correspondant au préambule de la revendication 1.

Ces enjoliveurs participent au style du véhicule et masquent l'extrémité de tôle des portes.

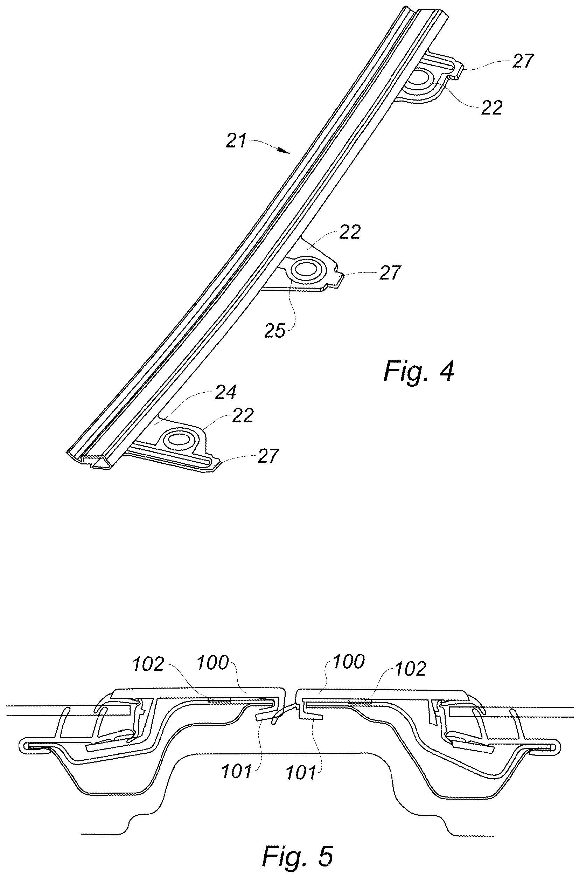

La figure 5 illustre en coupe deux portes latérales d'un véhicule équipées chacune d'un enjoliveur 100.

Les enjoliveurs 100 sont réalisés en matières plastiques injectées. De façon classique, ces enjoliveurs intègrent un retour de matière 101 qui vient masquer l'extrémité de la tôle de l'encadrement de porte du véhicule. La présence de ce retour de matière constitue une zone de contre dépouille comme illustré dans la figure 5.

Compte tenu de cette zone de contre dépouille, l'utilisation d'une cale mobile est nécessaire pour permettre le démoulage de l'enjoliveur.

Ce faisant, l'utilisation d'une cale lors du démoulage impose une côte transversale de l'enjoliveur importante pour permettre le dégagement de ladite cale.

L'enjoliveur comprend également des mousses ou films 102 de types différents pour éviter des frottements générateurs de bruit parasite entre la tôle de l'encadrement de porte et ledit enjoliveur.

Toutefois, ces solutions ne donnent pas une entière satisfaction.

En effet, la réalisation d'un enjoliveur à l'aide d'un procédé de moulage implique une largeur transversale dudit enjoliveur importante en raison de la contre-dépouille qui impose une largeur minimale dans l'outillage. Ladite largeur transversale s'avère préjudiciable pour des questions stylistiques.

De plus, la pose des différentes mousses ralentit et complexifie le montage de l'enjoliveur.

La présente invention a pour but de résoudre tout ou partie des inconvénients mentionnés ci-dessus.

A cet effet, la présente invention concerne un enjoliveur destiné à venir se superposer sur une tôle d'un encadrement d'une porte de véhicule , enjoliveur présentant les caractéristiques de la revendication 1.

Selon d'autres dispositions de l'invention prises individuellement ou en combinaison :
- l'élément de fixation présente une âme centrale en plastique rigide sur laquelle est surmoulée une lèvre proximale destinée à venir en appui contre une face interne de la tôle, la lèvre proximale étant formée dans un matériau élastomérique.
- une lèvre distale destinée à venir en appui d'une porte adjacente est surmoulée sur l'âme centrale, la lèvre distale étant formées dans un matériau élastomérique.
- l'élément d'aspect présente une nervure le long de son arête distale s'engageant dans une rainure présente sur la longueur de l'élément de fixation.
- l'élément de fixation présente au moins une languette qui s'étend transversalement depuis l'âme.
- l'élément de fixation présente une languette à chacune de ses extrémités ainsi qu'une languette en son centre.
- au moins une ouverture est ménagée dans l'organe de réception d'un joint, la languette de l'élément de fixation étant équipée à son extrémité libre d'un crochet conçu pour s'engager dans l'au moins une ouverture.
- l'au moins une languette de l'élément de fixation présente une ouverture dans laquelle est surmoulé un joint en matériau élastomérique.
- l'élément de fixation est constitué d'une matière plastique rigide conçue pour éviter les bruits de contact et les micro-vibrations avec les tôles peintes et/ou revêtues de vernis.
- l'élément de fixation est constitué d'au moins un matériau du groupe comprenant le polypropylène homo ou copolymere chargé minerai, le polypropylène chargé élastomère et minéral et l'acrylonitrile butadiène styrène (ABS) non chargé .

L'invention concerne également un véhicule automobile équipé d'au moins un enjoliveur tel que précité.

Les différents aspects définis ci-dessus non incompatibles peuvent être combinés.

L'invention sera encore mieux comprise à l'aide de la description détaillée qui est exposée ci-dessous en regard du dessin annexé dans lequel :
- la figure 1 représente la face interne de l'enjoliveur conformément à la présente invention ;
- la figure 2 représente une vue en coupe de l'enjoliveur conformément à la présente invention ;
- la figure 3 représente la face interne de l'élément d'aspect de l'enjoliveur conformément à la présente invention ;
- la figure 4 représente l'élément de fixation de l'enjoliveur conformément à la présente invention ; et
- la figure 5 représente une vue en coupe d'un enjoliveur conformément à l'art antérieur.

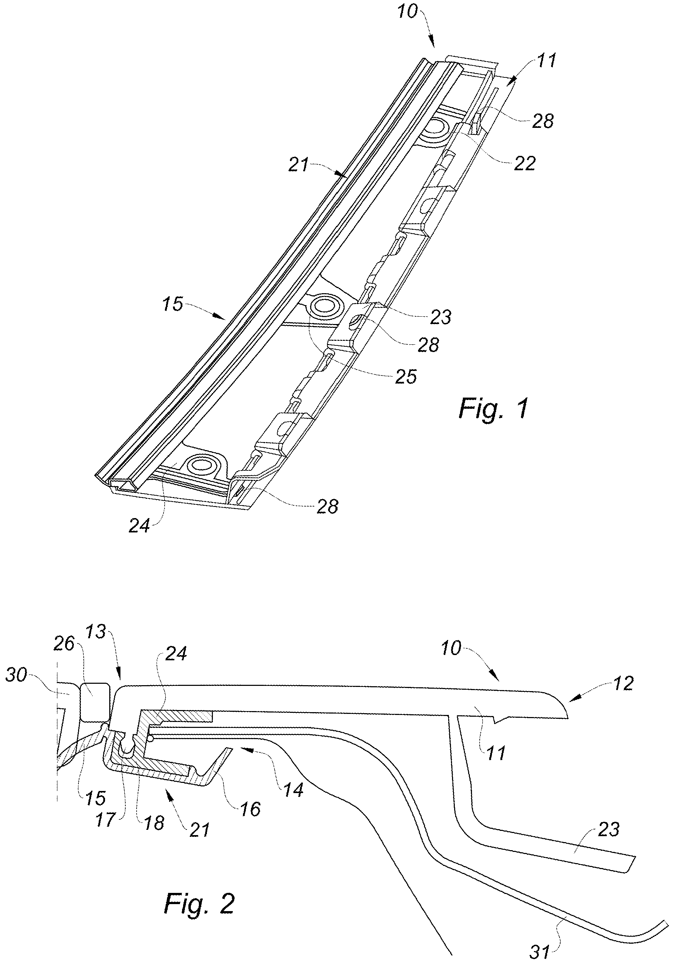

Comme illustré dans la figure 2, l'enjoliveur 10 selon une forme de réalisation de l'invention est destiné à venir se superposer sur une tôle 31 d'un encadrement d'une porte de véhicule. Par convention, on définit l'arête proximale 12 comme étant disposée en regard d'une vitre de la porte et l'arête distale 13 comme étant opposée à l'arête proximale c'est-à-dire du côté de l'extrémité de la porte.

L'enjoliveur 10 comprend deux éléments à savoir, un élément d'aspect 11 destiné à recouvrir la tôle 31 et un élément de fixation 21.

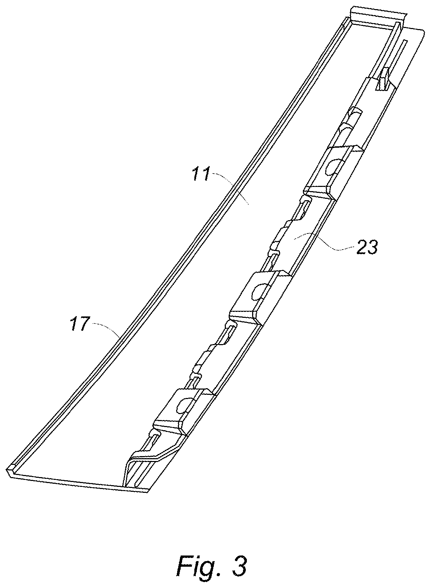

Comme on peut le voir plus particulièrement sur la figure 3, l'élément d'aspect 11 est une pièce moulée par injection en matière plastique qui présente une forme quadrangulaire allongée.

L'élément d'aspect 11 présente une nervure 17 qui s'étend le long de l'arête distale 13 et un organe 23 de réception d'un joint dans lequel coulisse une vitre qui s'étend le long de l'arête proximale 12 symétriquement à la nervure 17 . L'élément d'aspect 11 présente une face externe d'apparence et une face interne technique opposée.

Comme cela apparaît dans la figure 2, l'élément d'aspect 11 peut comprendre éventuellement des zones en contre dépouille de très faibles dimensions. Cette disposition technique permet à l'élément d'aspect 11 d'être démoulé simplement et ne nécessite pas l'utilisation d'une cale mobile dans le moule d'injection mais uniquement d'un chariot se déplaçant dans le moule d'injection par l'extérieur de l'enjoliveur. Le démoulage simplifié de l'élément d'aspect 11 permet d'affiner l'enjoliveur 10 dans sa dimension transversale car il peut être réalisé dans un outillage de moulage simple. L'affinage dans sa largeur de l'élément d'aspect 11 qui constitue la partie visible de l'enjoliveur 12 permet d'améliorer le design du véhicule.

Comme illustré dans la figure 1, l'enjoliveur 10 comprend également un élément de fixation 21 qui présente une âme centrale 24 en matière plastique rigide ainsi une lèvre proximale 16 destinée à venir en appui contre une face interne de la tôle 31 et, pour un enjoliveur de porte arrière, une lèvre distale 15 destinée à venir en appui d'une porte adjacente 30, les lèvres 15 et 16 étant formées dans un matériau élastomérique de préférence par moulage bi-matière.

L'élément de fixation 21 présente une partie transversale en forme de C 14 et, accolée à celle-ci, une rainure de fixation 18.

L'âme centrale 24 de l'élément de fixation 21 joue le rôle de structure dudit élément de fixation 21.

La lèvre distale 15 joue le rôle de joint d'étanchéité entre la porte arrière à laquelle est fixé l'enjoliveur et la porte adjacente 30.

La lèvre proximale 16 permet de limiter les arêtes vives en permettant d'encapsuler la tôle 31.

Comme illustré à la figure 4, l'élément de fixation 21 présente une languette 22 à chacune de ses extrémités ainsi qu'une languette 22 dans sa partie centrale qui s'étendent transversalement depuis l'âme 24. Les languettes 22 permettent d'éviter le contact entre la tôle 31 de l'encadrement de porte d'un véhicule et l'élément d'aspect 11 comme illustré dans la figure 2 et, ainsi, les languettes 22 empêchent l'apparition de grincements entre l'enjoliveur 10 et la tôle 31 de l'encadrement de la porte du véhicule.

Selon une possibilité, les languettes 22 présentent une ouverture dans laquelle est surmoulé un joint 25 en matériau élastomérique permettant d'absorber les vibrations. En pratique, le joint 25 peut être injecté en même temps que les lèvres distale 15 et proximale 16.

L'élément de fixation 21 comprend une cale 26; la cale 26 est reliée à l'élément de fixation 21 par un pont de matière ruptible.

La présence d'une cale 26 permet de faciliter la pose de l'enjoliveur 10 sur une tôle 31 d'un encadrement d'une porte de véhicule en contrôlant la cote entre ledit enjoliveur 10 et la porte adjacente. La cale 26 est ensuite retirée en cassant le pont de matière ruptible.

Comme illustré dans les figures 1 et 2, la nervure 17 présente le long de l'arête distale 13 de l'élément d'aspect 11 reçoit la rainure de fixation 18 présente sur la longueur de l'élément de fixation 21, la fixation de la nervure 17 de l'élément d'aspect 11 à la rainure 18 de l'élément de fixation 21 permet un montage rapide et efficace de l'enjoliveur 10.

La section transversale en forme de C 14 de l'élément de fixation 21 permet l'engagement dudit élément de fixation 21 sur la partie distale de la tôle 31.

L'invention permet donc de livrer un enjoliveur d'encadrement de porte selon deux configurations :
- soit une configuration dans laquelle l'élément d'aspect 11 et l'élément de fixation 21 assemblés l'un à l'autre avant la pose sur une ligne de montage de véhicule,
- soit une configuration dans laquelle l'élément d'aspect 11 et l'élément de fixation 21 sont livrés séparément, un opérateur sur la ligne de montage du véhicule fixant dans, un premier temps, l'élément de fixation 21 sur la tôle de la porte du véhicule puis; dans un second temps, l'élément d'aspect 10 sur l'élément de fixation 21.

Comme illustré dans la figure 3, les trois languettes 22 de l'élément de fixation 21 s'engagent dans l'organe de réception 23. Pour cela, chaque languette 22 présente à son extrémité un crochet 27 qui s'engage dans une ouverture 28 complémentaire ménagée dans l'organe de réception 23.

L'organe de liaison 23 et l'élément d'aspect 11 sont donc reliés l'un à l'autre par une double fixation qui assure la pérennité de l'enjoliveur 10.

## Revendications

1. Enjoliveur (10) destiné à venir se superposer sur une tôle (31) d'un encadrement d'une porte de véhicule (31), dans lequel l'enjoliveur (10) comprend :
• un élément d'aspect (11) destiné à recouvrir la tôle (31), présentant une arête proximale (12) destinée à être disposée en regard d'une vitre de la porte et une arête distale (13) opposée, l'élément d'aspect (11) ayant une face externe d'apparence et une face interne technique opposée et comprenant un organe de réception (23) d'un joint dans lequel coulisse la vitre ;
• un élément de fixation (21) engagé sur l'arête distale (13) de l'élément d'aspect (11), l'élément de fixation (21) présentant une section transversale en forme de C (14) permettant son engagement sur la partie distale de la tôle (31) ;
dans lequel les éléments d'aspect (11) et de fixation (21) sont assemblés l'un à l'autre ;
**caractérisé en ce que** l'élément de fixation (21) comprend au moins une cale (26) de positionnement reliée par un pont de matière ruptible.

2. Enjoliveur (10) selon la revendication 1, **caractérisé en ce que** l'élément de fixation (21) présente une âme centrale (24) en plastique rigide sur laquelle est surmoulée une lèvre proximale (16) destinée à venir en appui contre une face interne de la tôle (31), la lèvre proximale (16) étant formée dans un matériau élastomérique.

3. Enjoliveur (10) selon la revendication 2, **caractérisé en ce qu'**une lèvre distale (15) destinée à venir en appui d'une porte adjacente (30) est surmoulée sur l'âme centrale (24), la lèvre distale (15) étant formées dans un matériau élastomérique.

4. Enjoliveur (10) selon l'une quelconque des revendications 1 à 3, **caractérisé en ce que** l'élément d'aspect (11) présente une nervure (17) le long de son arête distale (13) s'engageant dans une rainure (18) présente sur la longueur de l'élément de fixation (21).

5. Enjoliveur (10) selon l'une quelconque des revendications 2 à 4, lorsque la revendication 4 dépend de la revendication 2, **caractérisé en ce que** l'élément de fixation (21) présente au moins une languette (22) qui s'étend transversalement depuis l'âme (24).

6. Enjoliveur (10) selon l'une quelconque des revendications 1 à 5, **caractérisé en ce que** l'élément de fixation (21) présente une languette (22) à chacune de ses extrémités ainsi qu'une languette (22) en son centre.

7. Enjoliveur (10) selon la revendication 6, **caractérisé en ce que** au moins une ouverture (28) est ménagée dans l'organe de réception (23) d'un joint et **en ce que** la languette (22) de l'élément de fixation (21) est équipée à son extrémité libre d'un crochet (27) conçu pour s'engager dans l'au moins une ouverture (28).

8. Enjoliveur (10) selon l'une quelconque des revendications 5 à 7, **caractérisé en ce que** l'au moins une languette (22) de l'élément de fixation (21) présente une ouverture dans laquelle est surmoulé un joint (25) en matériau élastomérique.

9. Enjoliveur (10) selon l'une quelconque des revendications 1 à 8, **caractérisé en ce que** l'élément de fixation (21) est constitué d'une matière plastique rigide conçue pour éviter les bruits de contact et les micro-vibrations avec les tôles peintes et/ou revêtues de vernis.

10. Enjoliveur selon la revendication 9, **caractérisé en ce que** l'élément de fixation est constitué d'au moins un matériau du groupe comprenant le polypropylène homo ou copolymere chargé minerai, le polypropylène chargé élastomère et minéral et l'acrylonitrile butadiène styrène (ABS) non chargé .

11. Véhicule automobile équipé d'au moins un enjoliveur selon l'une des revendications 1 à 10.

## Patentansprüche

1. Radkappe (10), die dazu bestimmt ist, auf einem Blech (31) eines Fahrzeugtürrahmens (31) darüber gelagert zu werden, wobei die Radkappe (10) umfasst:
• ein Blendenelement (11), das dazu bestimmt ist, das Blech (31) zu bedecken, und das eine proximale Kante (12) aufweist, die dazu bestimmt ist, gegenüber einem Fenster der Tür angeordnet zu werden, und eine gegenüberliegende distale Kante (13), wobei das Blendenelement (11) eine Außenseite für das Erscheinungsbild und eine technische Innenseite aufweist, die gegenüberliegt und ein Aufnahmeorgan (23) für eine Dichtung umfasst, in der das Fenster gleitet;
• ein Befestigungselement (21), das auf der distalen Kante (13) des Blendenelements (11) aufgesteckt ist, wobei das Befestigungselement (21) einen Querschnitt in C-Form (14) aufweist, der sein Aufstecken auf den distalen Teil des Blechs (31) ermöglicht;
wobei das Blenden- (11) und das Befestigungselement (21) miteinander verbunden sind;
**dadurch gekennzeichnet, dass** das Befestigungselement (21) wenigstens einen Keil (26) zur Positionierung umfasst, der durch eine Brücke aus bruchempfindlichem Material verbunden ist.

2. Radkappe (10) nach Anspruch 1, **dadurch gekennzeichnet, dass** das Befestigungselement (21) einen zentralen Kern (24) aus starrem Plastik aufweist, der mit einer proximalen Lippe (16) umformt ist, die dazu bestimmt ist, gegen eine Innenseite des Blechs (31) zu drücken, wobei die proximale Lippe (16) in einem Elastomermaterial gebildet ist.

3. Radkappe (10) nach Anspruch 2, **dadurch gekennzeichnet, dass** der zentrale Kern (24) mit einer distalen Lippe (15) umformt ist, die dazu bestimmt ist, an einer angrenzenden Tür (30) anzuliegen, wobei die distale Lippe (15) in einem Elastomermaterial gebildet ist.

4. Radkappe (10) nach einem der Ansprüche 1 bis 3, **dadurch gekennzeichnet, dass** das Blendenelement (11) eine Rippe (17) entlang seiner distalen Kante (13) aufweist, die in eine Nut (18) eingreift, die über die Länge des Befestigungselements (21) vorhanden ist.

5. Radkappe (10) nach einem der Ansprüche 2 bis 4, wenn der Anspruch 4 von Anspruch 2 abhängig ist, **dadurch gekennzeichnet, dass** das Befestigungselement (21) wenigstens eine Lasche (22) aufweist, die sich ausgehend von dem Kern (24) quer erstreckt.

6. Radkappe (10) nach einem der Ansprüche 1 bis 5, **dadurch gekennzeichnet, dass** das Befestigungselement (21) eine Lasche (22) an jedem seiner Enden sowie eine Lasche (22) in seiner Mitte aufweist.

7. Radkappe (10) nach Anspruch 6, **dadurch gekennzeichnet, dass** wenigstens eine Öffnung (28) in dem Aufnahmeorgan (23) für eine Dichtung eingerichtet ist und dadurch, dass die Lasche (22) des Befestigungselements (21) an ihrem freien Ende mit einem Haken (27) versehen ist, der ausgelegt ist, um in die wenigstens eine Öffnung (28) einzugreifen.

8. Radkappe (10) nach einem der Ansprüche 5 bis 7, **dadurch gekennzeichnet, dass** die wenigstens eine Lasche (22) des Befestigungselements (21) eine Öffnung aufweist, die mit einer Dichtung (25) aus Elastomermaterial umformt ist.

9. Radkappe (10) nach einem der Ansprüche 1 bis 8, **dadurch gekennzeichnet, dass** das Befestigungselement (21) aus einem starren Plastikmaterial besteht, das ausgelegt ist, um Kontaktgeräusche und Mikrovibrationen mit den gestrichenen und/oder lackierten Blechen zu vermeiden.

10. Radkappe nach Anspruch 9, **dadurch gekennzeichnet, dass** das Befestigungselement aus wenigstens einem Material der Gruppe besteht, umfassend mineralverstärktes Polypropylen-Homopolymer oder -Copolymer, elastomer- und mineralverstärktes Polypropylen und nicht verstärktes Acrylnitril-Butadien-Styrol (ABS).

11. Kraftfahrzeug, das mit wenigstens einer Radkappe nach einem der Ansprüche 1 bis 10 ausgestattet ist.

## Claims

1. A hubcap (10) intended to be superimposed on a sheet metal (31) of a frame of a vehicle door (31), wherein the hubcap (10) comprises:
• an aspect element (11) intended to cover the sheet metal (31), having a proximal edge (12) intended to be disposed opposite a window of the door and an opposite distal edge (13), the aspect element (11) having an outer appearance face and an opposite inner technical face and comprising a member (23) for receiving a seal in which the window slides;
• a fastening element (21) engaged on the distal edge (13) of the aspect element (11), the fastening element (21) having a C-shaped cross-section (14) allowing engagement thereof on the distal portion of the sheet metal (31);
wherein the aspect (11) and fastening (21) elements are assembled together;
**characterized in that** the fastening element (21) comprises at least one positioning wedge (26) connected by a bridge made of a breakable material.

2. The hubcap (10) according to claim 1, **characterized in that** the fastening element (21) has a rigid plastic central core (24) on which is overmolded a proximal lip (16) intended to bear against an inner face of the sheet metal (31), the proximal lip (16) being formed in an elastomeric material.

3. The hubcap (10) according to claim 2, **characterized in that** a distal lip (15) intended to bear on an adjacent door (30) is overmolded onto the central core (24), the distal lip (15) being formed from an elastomeric material.

4. The hubcap (10) according to any one of claims 1 to 3, **characterized in that** the aspect element (11) has a rib (17) along its distal edge (13) fitting into a groove (18) present over the length of the fastening element (21).

5. The hubcap (10) according to any one of claims 2 to 4, when claim 4 depends on claim 2, **characterized in that** the fastening element (21) has at least one tab (22) which extends transversely from the core (24).

6. The hubcap (10) according to any one of claims 1 to 5, **characterized in that** the fastening element (21) has a tab (22) at each of its ends as well as a tab (22) in its center.

7. The hubcap (10) according to claim 6, **characterized in that** at least one opening (28) is formed in the member (23) for receiving a seal and **in that** the tab (22) of the fastening element (21) is equipped at its free end with a hook (27) designed so as to fit into the at least one opening (28).

8. The hubcap (10) according to any one of claims 5 to 7, **characterized in that** the at least one tab (22) of the fastening element (21) has an opening in which is overmolded a seal (25) made of elastomeric material.

9. The hubcap (10) according to any one of claims 1 to 8, **characterized in that** the fastening element (21) consists of a rigid plastic matter designed so as to avoid contact noise and micro-vibrations with painted and/or varnished sheet metals.

10. The hubcap according to claim 9, **characterized in that** the fastening element consists of at least one material from the group comprising a homopolymer or copolymer polypropylene filled with mineral, polypropylene filled with elastomer and mineral and non-filled acrylonitrile butadiene styrene (ABS).

11. A motor vehicle equipped with at least one hubcap according to any of claims 1 to 10.
